# EUROPÄISCHE PATENTSCHRIFT

(11) **EP 1 648 745 B1**
(45) Veröffentlichungstag und Bekanntmachung des Hinweises auf die Patenterteilung: **25.10.2006**
(21) Anmeldenummer: 04738596.8
(22) Anmeldetag: 03.06.2004
(51) Int. Cl.: B60R 21/0132

(54) **VORRICHTUNG UND VERFAHREN ZUR MESSUNG VON BESCHLEUNIGUNGEN FÜR EIN FAHRZEUG-INSASSENSCHUTZSYSTEM**
DEVICE AND METHOD FOR MEASURING ACCELERATIONS FOR A PASSENGER PROTECTION SYSTEM IN A VEHICLE
DISPOSITIF ET PROCEDE DE MESURE D'ACCELERATIONS POUR SYSTEME DE PROTECTION D'OCCUPANT DE VEHICULE

(30) Priorität: 30.07.2003 DE 10335170
(43) Veröffentlichungstag der Anmeldung: 26.04.2006
(73) Patentinhaber: Conti Temic microelectronic GmbH, 90411 Nürnberg (DE)
(72) Erfinder: FENDT, Günter, 86529 Schrobenhausen (DE); STEURER, Helmut, 85302 Gerolsbach-Junkenhofen (DE); CHRISTL, Helmut, 85092 Kösching (DE); HOLLWECK, Christian, 85084 Reichertshofen (DE)
(86) Internationale Anmeldenummer: PCT/DE2004/001142
(87) Internationale Veröffentlichungsnummer: WO 2005/014342

(56) Entgegenhaltungen:
- EP-A- 0 311 039
- DE-A- 3 816 589
- DE-A- 10 002 471
- DE-A- 19 852 468
- DE-C- 19 715 575
- US-A- 6 023 664

## Beschreibung

Die Erfindung betrifft eine Vorrichtung zur Messung von Beschleunigungen für ein Fahrzeug-Insassenschutzsystem gemäß Anspruch 1 und ein entsprechendes Verfahren gemäß Anspruch 13.

Um die Sicherheit im Straßenverkehr zu verbessern, werden ständig Verbesserungen an den bereits bekannten Insassenschutzsystemen in Kraftfahrzeugen vorgenommen, damit die Insassen des Kraftfahrzeugs bei einem Aufprall des Fahrzeugs, beispielsweise auf ein Hindernis oder mit einem anderen Fahrzeug optimal geschützt werden. Typischerweise umfasst ein Insassenschutzsystem ein zentrales Steuergerät mit einer Sensoranordnung, die einen oder mehrere Beschleunigungssensoren umfassen kann, und einer Auswerteeinheit, einen oder mehrere Satellitensensoren, die ebenfalls einen oder mehrere Beschleunigungssensoren umfassen können, und geeignete Schutzmittel, zum Beispiel Airbags, Gurtstraffer oder Überrollbügel.

Zum Messen, Erfassen oder Aufnehmen (die Ausdrücke werden im folgenden synonym verwendet) der bei einem Aufprall auftretenden Beschleunigungen sind verschiedene Systeme mit unterschiedlichen Anordnungen von Beschleunigungssensoren bekannt. Man unterscheidet im wesentlichen zentral im Fahrzeug angeordnete Sensoren, die häufig zusammen mit einer Auswerteeinheit in einem zentral angeordneten Steuergerät angeordnet sind, und weitere dezentral im Fahrzeug angeordnete, so genannte Satellitensensoren. Letztere sind meist in der Nähe der Außenhaut des Fahrzeugs angeordnet, wobei der genaue Ort abhängig von der speziellen Aufgabe des Sensors gewählt wird.

Die beschleunigungsempfindlichen Sensoren werden im folgenden synonym als "Beschleunigungssensoren", "Beschleunigungsaufnehmer" oder noch kürzer als "Sensoren" bezeichnet. Diese weisen im allgemeinen eine Richtcharakteristik bezüglich der Richtung der einwirkenden Beschleunigung in Bezug auf die Ausrichtung des Sensors auf. Die Richtcharakteristik gibt eine Empfindlichkeitshauptrichtung vor, in der die Messempfindlichkeit des Sensors, d.h. die Stärke seines Ausgangsmesssignals in Bezug auf die Stärke der Beschleunigung, maximal ist, wenn die Richtung der Beschleunigung parallel oder antiparallel zur Empfindlichkeitshauptrichtung gerichtet ist.

Im folgenden wird angenommen, dass alle genannten Richtungen etwa in einer Ebene liegen, insbesondere in der Ebene, in der sich das Fahrzeug bewegt. Ferner wird angenommen, dass jeder Sensor elektrisch mit einem zugehörigen Auswertekanal verbunden ist, in dem das vom Sensor unmittelbar erzeugte Messsignal verarbeitet und/oder zumindest teilweise ausgewertet und der Auswerteeinheit im Steuergerät zugeführt wird. Ein Auswertekanal kann umfassen einen Analog-Digital-Wandler, eine Schaltung zum Filtern (beispielweise Glätten), zumindest eine Schaltung zum Integrieren, eine Schaltung zum Vergleichen eines Signals mit einem vorbestimmten Schwellwert, und/oder logische Schaltungen zum Verknüpfen von Signalen, die in demselben oder von einem anderen Sensor oder anderweitig erzeugt worden sind. Im einfachsten Fall umfasst ein Auswertekanal lediglich Mittel zum Weiterleiten des vom Sensor erzeugten Messsignals an die Auswerteeinheit. In der Auswerteeinheit werden die Signale aus den Auswertekanälen verarbeitet und/oder ausgewertet, und es wird ein Auslösesignal zum Auslösen der Sicherheitseinrichtung des Fahrzeugs erzeugt.

In den Auswertekanälen und gegebenenfalls auch in der zentralen Auswerteeinheit können analoge Messsignale der Sensoren (beispielsweise elektrische Spannungen) und die in den Verarbeitungsschritten erzeugten analogen Signale in Bezug auf Referenzwerte (beispielsweise eine Referenzspannung) interpretiert werden. Die Referenzwerte können für verschiedene Auswertekanäle unterschiedlich oder auch im wesentlichen gleich sein.

In einfachen Fällen der Verarbeitung wird im Auswertekanal beispielsweise das von einem Sensor erzeugte, einer Beschleunigung entsprechende Signal in einem Tiefpassfilter geglättet und gegebenenfalls in einem Integrator integriert, wodurch ein einer wirkenden Geschwindigkeit entsprechenden Signal erzeugt wird. Das Beschleunigungs- und/oder das Geschwindigkeitssignal wird mit einem Schwellwert verglichen. Wenn das Signal den Schwellwert übersteigt, wird ein Auslösesignal gesetzt. Zur Vermeidung eines unbeabsichtigten Auslösens der Sicherheitsvorrichtung, zum Beispiel aufgrund eines Messfehlers oder einer anderen Fehlfunktion des Sensors oder eines anderen Schaltungselements im Auswertekanal, kann ein solches Auslösesignal wenigstens einer Überprüfung auf Plausibilität unterzogen werden, die darin besteht, dass das Auslösesignal mit wenigstens einem aus einer unabhängigen Auswertung erzeugten Plausibilitätssignal verknüpft wird. In einem einfachen Fall kann das Auslösesignal beispielsweise mit einem in einem anderen Auswertekanal unabhängig erzeugten Auslösesignal mittels einer logischen "UND"-Schaltung verknüpft werden.

Um eine optimale Abdeckung aller Richtungen von auf das Fahrzeug einwirkenden Beschleunigungen in der Bewegungsebene zu erreichen und um die Größe und Richtung der einwirkenden Beschleunigung zu bestimmen, sind im Regelfall mindestens zwei Beschleunigungssensoren (und diese vorzugsweise in einem rechten Winkel zueinander) vorgesehen. Mit einem einzigen Beschleunigungssensor können dagegen nur Beschleunigungen in einer Wirkrichtung detektiert werden. Wenn der Beschleunigungssensor beispielsweise in Richtung der Fahrzeuglängsachse ausgerichtet ist, kann kein Aufprall von der Seite detektiert werden; und bei einem Aufprall mit einer Beschleunigungskomponente in Richtung der Fahrzeuglängsachse kann anhand des Vorzeichens der gemessenen Beschleunigungskomponente unterschieden werden, ob die Komponente von vorne nach hinten (wie bei einem Frontal-Aufprall) oder umgekehrt (wie bei einem Heck-Aufprall) ausgerichtet ist.

Zur Anordnung von zwei "flächenerfassenden" Beschleunigungssensoren haben sich in der Praxis zwei bevorzugte Sensoranordnungen herauskristallisiert:
a) die beiden Sensoren sind entlang der Fahrzeuglängsachse (X-Einbaurichtung) und einer Fahrzeugquerachse (Y-Einbaurichtung), oder
b) beide Sensoren sind in einer Richtung von im wesentlichen ± 45 Grad zur Fahrzeuglängsachse ausgerichtet.

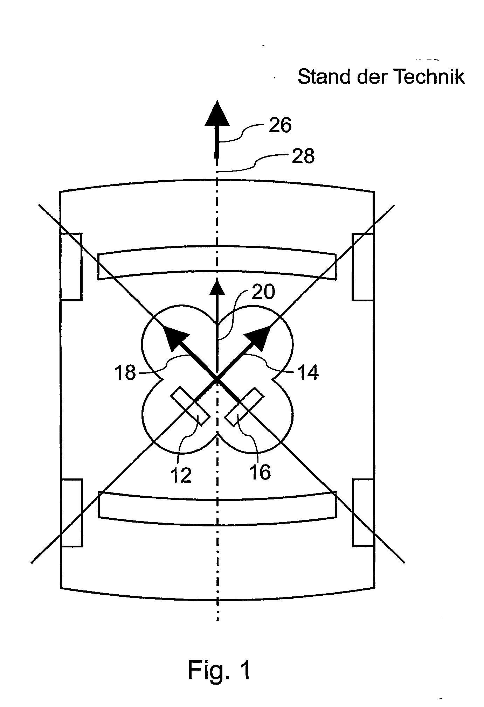

Auf die Anordnung a) wird nachfolgend nicht näher eingegangen. Die Sensoranordnung b) ist unten bezugnehmend auf in der Fig. 1 erläutert, da an dieser Anordnung die Wirkung und der Vorteil der Erfindung besonders leicht erklärbar ist. Diese Anordnung steht jedoch nur beispielhaft für Anordnungen mit gegenüber der Fahrzeuglängsachse bzw. Querachse allgemein unter einem Winkel ausgerichteten Sensoren.

EP 0 311 039 A2 offenbart eine Sensoranordnung mit drei Beschleunigungsaufnehmern, deren drei Empfindlichkeitsrichtungen zum Messen von Beschleunigungskomponenten aus beliebigen Richtungen jeweils um 120° zueinander versetzt angeordnet sind. DE 38 16 589 A1 und DE 100 02 471 A1 offenbaren jeweils eine Sensoranordnung mit zwei Sensoren, von denen die Empfindlichkeitsrichtungen des ersten Sensors einen Winkel von 45 Grad und die des zweiten Sensors einen Winkel von 135 Grad mit der Fahrzeuglängsachse bildet. Keine der genannten Druckschriften befasst sich jedoch mit dem Problem des Einflusses der Veränderung eines Referenzwertes auf das Auslöseverhalten einer Insassenschutzvorrichtung.

DE-A-19 852 468 zeigt die Merkmale des Oberbegriffs des Anspruch 1.

Aufgabe der vorliegenden Erfindung ist es daher, eine Vorrichtung und ein Verfahren zur Messung von Beschleunigungen für ein Fahrzeug-Insassenschutzsystem vorzuschlagen, welche nur eine geringe Empfindlichkeit gegenüber Schwankungen von Referenzwerten in Auswertekanälen aufweisen.

Diese Aufgabe wird durch eine Vorrichtung mit den Merkmalen von Anspruch 1 und durch ein entsprechendes Verfahren mit den Merkmalen von Anspruch 13 gelöst. Bevorzugte Ausgestaltungen der Erfindung ergeben sich aus den abhängigen Ansprüchen.

Ein wesentlicher Gedanke der Erfindung ist es, in einer Vorrichtung mit einer ein Paar von zwei Beschleunigungssensoren umfassenden Sensoranordnung den einen der beiden Sensoren in Bezug auf den anderen Sensor und die gewünschte Hauptrichtung für die Messung einer Beschleunigung so anzuordnen und auszurichten, dass die Komponente von seiner auf die Hauptmessrichtung projizierten Empfindlichkeitsrichtung (Hauptprojektion) entgegengesetzt gerichtet ist wie die Hauptprojektion der Empfindlichkeitsrichtung des anderen Sensors, und dies in Kombination mit einer geeignet durchgeführten Auswertung der Sensorsignale der beiden Sensoren. Dadurch erzielt man eine zumindest teilweise Kompensation des Einflusses der Änderung des Referenzwerts in den zu den Sensoren gehörenden Auswertekanälen. Insbesondere wird die Auswirkung von Änderungen der Referenzwerte auf die Signalauswertung verringert, die Stabilität des Auswertealgorithmus bezüglich der von den Sensoren erzeugten Messsignale, insbesondere bei möglichen Schwankungen der Referenzwerte in den Auswertekanälen, erhöht und schließlich die Robustheit des Auswerteverfahrens verbessert.

Die Erfindung betrifft nun eine Vorrichtung zur Messung von Beschleunigungen für ein Fahrzeug-Insassenschutzsystem, die für eine vorbestimmte Hauptmessrichtung angepasst ist und mindestens einen ersten Beschleunigungssensor mit einer ersten Empfindlichkeitsrichtung, die in ihrer Projektion auf die Hauptmessrichtung eine erste Hauptprojektion und in ihrer Projektion auf eine senkrecht zur Hauptmessrichtung ausgerichtete Querrichtung eine erste Querprojektion bildet, und einem ersten Auswertekanal zur Verarbeitung eines ersten Messsignals des ersten Beschleunigungssensors bezüglich eines ersten Referenzwertes umfasst. Die Vorrichtung umfasst ferner mindestens einen zweiten Beschleunigungssensor mit einer zweiten Empfindlichkeitsrichtung, die in ihrer Projektion auf die Hauptmessrichtung eine zweite Hauptprojektion und in ihrer Projektion auf die Querrichtung eine zweite Querprojektion bildet und einem zweiten Auswertekanal zur Verarbeitung eines zweiten Messsignals des zweiten Beschleunigungssensors bezüglich eines zweiten Referenzwertes, sowie Auswertemittel zur Auswertung von zumindest dem verarbeiteten ersten Messsignal und dem verarbeiteten zweiten Messsignal und zumindest teilweise darauf begründeter Erzeugung eines Auslösesignals für das Insassenschutzsystem.

Erfindungsgemäß sind die erste und zweite Querprojektion der ersten und zweiten Empfindlichkeitsrichtungen parallel zueinander und die erste und zweite Hauptprojektion der ersten und zweiten Empfindlichkeitsrichtungen antiparallel zueinander ausgerichtet. Ferner wird die Auswertung so ausgeführt, dass sich eine zumindest teilweise Fehlerkompensation ergibt, wenn sich der erste bzw. zweite Referenzwert im ersten bzw. zweiten Auswertekanal verändert. Unter dem Begriff "antiparallel" wird hier und im folgenden "in entgegengesetzter Richtung parallel verlaufend" verstanden.

In vorteilhafter Weise wird die Auswertung in Abhängigkeit von der Ausrichtung der ersten und zweiten Empfindlichkeitsrichtung zur Hauptmessrichtung so ausgeführt, dass die Fehlerkompensation bei der Veränderung des ersten und zweiten Referenzwerts maximal ist.

Vorzugsweise umfasst die Auswertung einen Vergleich einer ersten Auswertefunktion des verarbeiteten ersten Messsignals und des verarbeiteten zweiten Messsignals mit einer entsprechenden zweiten Auswertefunktion der ersten Einsatzschwelle und der zweiten Einsatzschwelle.

Insbesondere kann der erste Auswertekanal eine erste Einsatzschwelle und der zweite Auswertekanal eine zweite Einsatzschwelle umfassen und die erste Auswertefunktion ist eine gewichtete Differenz bzw. Summe des verarbeiteten ersten Messsignal und des verarbeiteten zweiten Messsignal, und die entsprechende zweite Auswertefunktion eine gewichtete Summe bzw. Differenz der ersten Einsatzschwelle und der zweiten Einsatzschwelle sein. Auf diese Weise ist die Auswertung besonders leicht zu implementieren.

Insbesondere kann der erste Referenzwert und der zweite Referenzwert ein dem ersten und zweiten Auswertekanal gemeinsamer Referenzwert sein, beispielsweise wenn die Messsignale oder verarbeiteten Signale Spannungen, die bezüglich eines gemeinsamen Potentials gemessen werden, sind.

Vorzugsweise ist der Winkelabstand der ersten Empfindlichkeitsrichtung und der der zweiten Empfindlichkeitsrichtung sowohl zur Hauptmessrichtung als auch zur Querrichtung ungleich 0° oder 90°, insbesondere größer oder gleich 10°. Vorzugsweise ist auch der Winkelabstand zwischen der ersten Empfindlichkeitsrichtung und der der zweiten Empfindlichkeitsrichtung im wesentlichen 90°. Insbesondere kann der Winkel der ersten Empfindlichkeitsrichtung zur Hauptmessrichtung im wesentlichen 45° bzw. 135° und der Winkel der zweiten Empfindlichkeitsrichtung zur Hauptmessrichtung im wesentlichen 135° bzw. 45° sein. Durch jede dieser Ausgestaltungen der Anordnung der beiden Sensoren wird Messgenauigkeit der Vorrichtung und die Genauigkeit, mit der eine Richtung der auf das Fahrzeug wirkenden Beschleunigung bestimmt werden kann, erhöht. Alternativ zu diesen beispielhaft genannten Winkeln sind in einer bevorzugten Ausführungsform auch die Winkel -45° bzw. -135 ° oder -135 ° bzw. -45 ° oder 225 ° bzw. 315° oder 315 ° bzw. 225 ° ebenso möglich.

Die Hauptmessrichtung kann beispielsweise im wesentlichen die Vorwärtsrichtung des Fahrzeugs sein. Die Hauptmessrichtung kann alternativ auch im wesentlichen senkrecht zur Vorwärtsrichtung des Fahrzeugs ausgerichtet sein.
Der erste und zweite Beschleunigungssensor und die Auswertemittel können in einem Zentralgerät angeordnet sein. Eine solche Ausführungsform ist besonders kompakt und leicht zu installieren.

Die Vorrichtung kann ferner wenigstens einen Upfront-Sensor oder wenigstens einen Seitensensor oder einen sogenannten Safing-Sensor umfassen. Von den zusätzlichen Sensoren können zusätzliche Information und Signale, die zur Plausibilisierung, zur Erhöhung der Sicherheit und zur Verringerung des Risikos einer Fehlauslösung des Insassenschutzsystems heran gezogen werden.

Die Erfindung betrifft ferner ein Verfahren zur Messung von Beschleunigungen für ein Fahrzeug-Insassenschutzsystem, das die folgenden Schritte umfasst:
i) Festlegen einer Hauptmessrichtung in Bezug auf eine Vorwärtsrichtung des Fahrzeugs;
ii) Bereitstellen eines ersten Beschleunigungssensors mit einer ersten Empfindlichkeitsrichtung, die in ihrer Projektion auf die Hauptmessrichtung eine erste Hauptprojektion und in ihrer Projektion auf eine senkrecht zur Hauptmessrichtung ausgerichteten Querrichtung eine erste Querprojektion bildet;
iii) Bereitstellen eines zweiten Beschleunigungssensors mit einer zweiten Empfindlichkeitsrichtung, die in ihrer Projektion auf die Hauptmessrichtung eine zweite Hauptprojektion und in ihrer Projektion auf die Querrichtung eine zweite Querprojektion bildet. Entsprechend eines Aspekts der Erfindung sind die erste und zweite Querprojektion der ersten und zweiten Empfindlichkeitsrichtung parallel zueinander und die erste und zweite Hauptprojektion der ersten und zweiten Empfindlichkeitsrichtung antiparallel zueinander.
   Das Verfahren umfasst ferner
iv) das Verarbeiten des ersten Messsignals des ersten Beschleunigungssensors zur Bildung eines ersten verarbeiteten Signals bezüglich eines ersten Referenzwertes in einem ersten Auswertekanal zur Verarbeitung des ersten Signals des ersten Beschleunigungssensors;
v) das Verarbeiten des zweiten Messsignals des zweiten Beschleunigungssensors zur Bildung eines zweiten verarbeiteten Signals bezüglich eines zweiten Referenzwertes in einem zweiten Auswertekanal zur Verarbeitung eines zweiten Signals des zweiten Beschleunigungssensors;
vi) das Auswerten des ersten und zweiten verarbeiteten Signals, so dass sich eine zumindest teilweise Fehlerkompensation ergibt, wenn sich der erste und zweite Referenzwert im ersten und zweiten Auswertekanal verändern.

Der erste Referenzwert und der zweite Referenzwert können ein dem ersten und zweiten Auswertekanal gemeinsamer Referenzwert sein.

Es ist vorteilhaft, dass die Auswertung in Abhängigkeit von der Ausrichtung der ersten und zweiten Empfindlichkeitsrichtung zur Hauptmessrichtung so gestaltet wird, dass die Fehlerkompensation bei der Veränderung des ersten und zweiten Referenzwerts maximal ist. In vorteilhafter Weise umfasst die Auswertung in Schritt vi): a) Bilden einer gewichteten Schwellensummenfunktion bzw. Schwellendifferenzfunktion der ersten Einsatzschwelle und der zweiten Einsatzschwelle; b) Bilden einer gewichteten Differenzfunktion bzw. Summenfunktion des verarbeiteten ersten Messsignals und des verarbeiteten zweiten Messsignals; c) Vergleichen der gewichteten Differenzfunktion bzw. Summenfunktion aus Schritt b) mit der gewichteten Schwellensummenfunktion bzw. Schwellendifferenzfunktion aus Schritt a); wobei ferner das Auslösesignal in den Zustand zum Auslösen gesetzt wird, wenn die gewichtete Differenzfunktion bzw. Summenfunktion aus Schritt b) die gewichtete Schwellensummenfunktion bzw. Schwellendifferenzfunktion aus Schritt a) überschreitet.

Insbesondere kann in Schritt b) die gewichtete Differenzfunktion bzw. Summenfunktion des verarbeiteten ersten Messsignals (F1) und des verarbeiteten zweiten Messsignals (F2) die Form
a1*F1 - a2*F2 bzw. a1*F1 + a2*F2
aufweisen, wobei a1 und a2 Normierungsfaktoren mit 0 < a1, a2 < 1 sind, und in Schritt a) die gewichtete Schwellensummenfunktion bzw. Schwellendifferenzfunktion der ersten Einsatzschwelle (T1) und der zweiten Einsatzschwelle (T2) die Form
b1*T1 + b2*T2 bzw. b1*T1 - b2*T2
aufweisen, wobei b1 und b2 Normierungsfaktoren mit 0 < b1, b2 < 1 sind.

In vorteilhafter Weise ist dabei:
a1 ≈ cos α1 und a2 ≈ cos α2
wobei α1 der Winkel zwischen der Hauptmessrichtung und der ersten Empfindlichkeitsrichtung und α2 der Winkel zwischen der Hauptmessrichtung und der zweiten Empfindlichkeitsrichtung ist.

In bevorzugter Weise umfasst das Verfahren in den Schritten iv) und v) das Verarbeiten des ersten bzw. Messsignals des ersten bzw. Beschleunigungssensors mindestens eine Integration des Messsignals.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, den Ansprüchen, der Zusammenfassung und den Zeichnungen werden die in der unten angeführten Liste der Bezugszeichen verwendeten Begriffe und Bezugszeichen verwendet.

Die Zeichnungen zeigen in:
- Fig. 1: eine schematische Darstellung einer Sensoranordnung in einem Fahrzeug in einer Aufsicht für eine Hauptmessrichtung von vorne entlang der Fahrzeuglängsachse mit zwei unter Winkeln von α1 = 45° und α2 = -45° ausgerichteten Beschleunigungssensoren nach dem Stand der Technik;
- Fig. 2: eine schematische Darstellung einer Sensoranordnung in einem Fahrzeug in einer Aufsicht für eine Hauptmessrichtung von vorne entlang der Fahrzeuglängsachse mit zwei unter Winkeln von α1 = 135° und α2 = 45° erfindungsgemäß ausgerichteten Beschleunigungssensoren;
- Fig. 3: ein Diagramm zur Erläuterung erfindungsgemäßer Anordnungen und Ausrichtungen der Winkel zwischen der Hauptmessrichtung und den Empfindlichkeitsrichtungen des ersten und zweiten Beschleunigungssensors;
- Fig. 4a: ein Schaubild mit Diagrammen zur Erläuterung der Entstehung der Vergrößerung eines Messfehlers bei einer Änderung des Referenzsignals in einer Vorrichtung mit einer Sensoranordnung nach dem Stand der Technik;
- Fig. 4b: ein entsprechendes Schaubild mit Diagrammen zur Erläuterung der Entstehung der zumindest teilweisen Kompensation eines Messfehlers bei einer Änderung des Referenzsignals in einer erfindungsgemäßen Vorrichtung;
- Fig. 5: eine schematische Darstellung einer erfindungsgemäßen Sensoranordnung mit zusätzlichen Satellitensensoren in einem Fahrzeug in einer Aufsicht; und
- Fig. 6A, 6B bzw. 6C: schematische Darstellungen von Stufen der Auswertung von verarbeiteten Messsignalen der erfindungsgemäß angeordneten Beschleunigungssensoren zusammen mit verarbeiteten Signalen eines zusätzlich angeordneten Upfront-, Safing- bzw. Seitensensors.

Im folgenden können gleiche und/oder funktional gleiche Elemente mit den gleichen Bezugszeichen versehen sein. Die Winkelangaben beziehen sich auf ein "Rechtsdrehendes-Koordinatensystem".

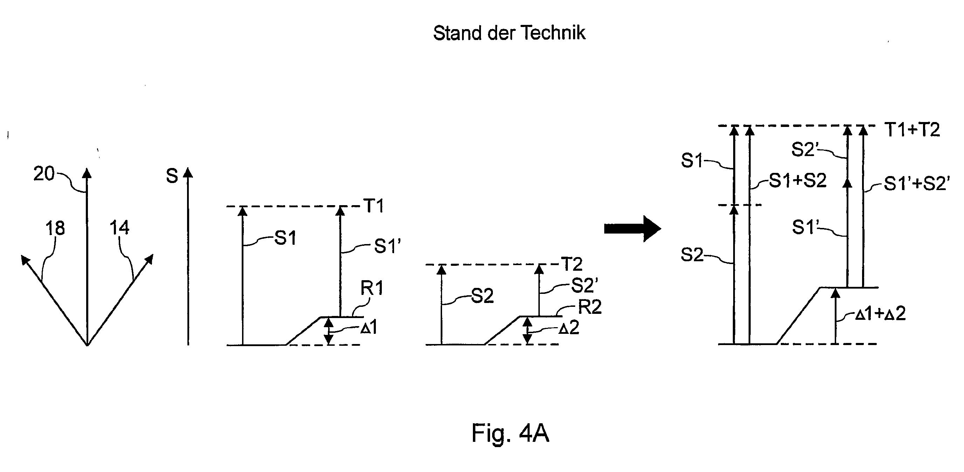

Die in Fig. 1 gezeigte Sensoranordnung nach dem Stand der Technik umfasst einen ersten und einem zweiten Beschleunigungsaufnehmer, wobei der erste Beschleunigungssensor 12 eine erste Empfindlichkeitsrichtung 14 unter einem Winkel von + 45 Grad in Bezug auf die Vorwärtsrichtung 26 des Fahrzeugs und der zweite Beschleunigungssensor 16 eine zweite Empfindlichkeitsrichtung 18 unter einem Winkel von - 45 Grad in Bezug auf die Vorwärtsrichtung 26 des Fahrzeugs aufweist. Die Vorwärtsrichtung 26 entspricht in diesem Beispiel der Hauptmessrichtung 20, die im wesentlichen parallel zur Längsachse 28 des Fahrzeugs und nach vorne ausgerichtet ist. Für eine solche Sensoranordnung ergibt sich im Falle eines Frontal-Aufpralls für die von dem ersten und zweiten Beschleunigungssensor 12 und 16 gelieferten Messsignale die in der Fig. 4A gezeigte, weiter unten erläuterte Situation, in der sich eine Veränderung des Referenzwerts im ersten und zweiten Auswertekanal so auswirkt dass sich das Auslöseverhaltens des Auswertealgorithmus ändert.

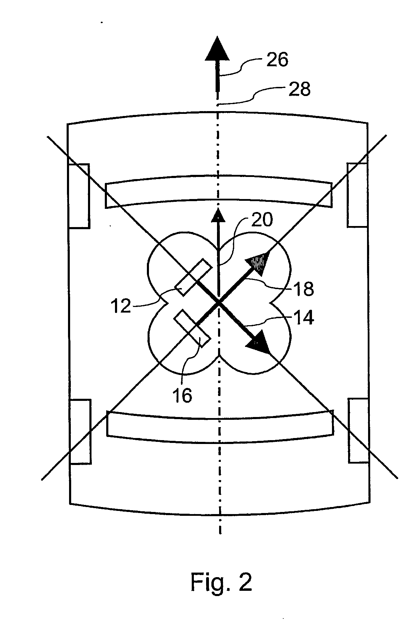

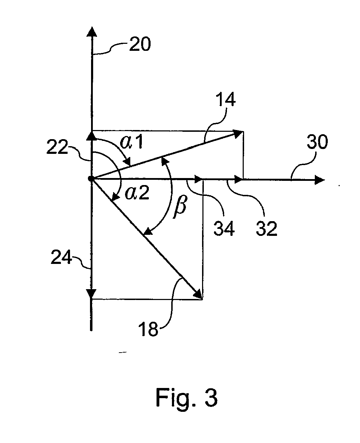

Eine Kompensation des Einflusses der Veränderung des Referenzwerts im ersten und zweiten Auswertekanal wird erfindungsgemäß erreicht, indem man die Sensoranordnung der Fig. 1 um 90 Grad beispielsweise im Uhrzeigersinn dreht und so die in Fig. 2 gezeigte Sensoranordnung erhält. In der in Fig. 2 gezeigten Sensoranordnung beträgt der Winkel zwischen der ersten Empfindlichkeitsrichtung 14 des ersten Beschleunigungssensors 12 und der Hauptmessrichtung 20 α1=135 Grad. Die Hauptmessrichtung 20 ist, wie in Fig. 1 angenommen, ebenfalls in Vorwärtsrichtung 26 entlang der Fahrzeuglängsachse 28. Der Winkel zwischen der Empfindlichkeitsrichtung 18 des zweiten Beschleunigungssensors 16 und der Hauptmessrichtung 20 beträgt α2=45 Grad. Die Erfindung ist jedoch nicht beschränkt auf die speziellen Winkel α1=135 Grad für die erste Empfindlichkeitsrichtung 14 und α2=45 Grad für die zweite Empfindlichkeitsrichtung 18. Vielmehr können erfindungsgemäß die erste und zweite Empfindlichkeitsrichtung 14 und 18 innerhalb gewisser Mindestwinkelabstände von der Hauptmessrichtung 20 und einer dazu senkrechten Querrichtung 30 einen beliebigen Winkel bilden. Die Wirkung der Erfindung ist auch nicht beschränkt auf die nur beispielhaft gezeigte Situation, dass die beiden Empfindlichkeitsrichtungen 14, 18 einen rechten Winkel (90 Grad) einschließen. Bezugnehmend auf Fig. 3 wird die erfindungsgemäße Sensorausrichtung wie folgt beschrieben.

Die Fig. 3 zeigt die erste Empfindlichkeitsrichtung 14 des ersten Beschleunigungssensors 12 mit einem zugehörigen Winkel α1, und die zweite Empfindlichkeitsrichtung 18 des zweiten Beschleunigungssensors 16 mit einem zugehörigen Winkel α2, wobei die Winkel α1 und α2 in Bezug auf die Hauptmessrichtung 20 der Sensoranordnung gemessen werden. Die erste Empfindlichkeitsrichtung 14 lässt sich zerlegen in eine erste Hauptprojektion 22 auf die Hauptmessrichtung 20 und eine erste Querprojektion 32 auf die Querrichtung 30, die in der Bewegungsebene des Fahrzeugs unter einem Winkel von 90 Grad zur Hauptmessrichtung 20 ausgerichtet ist. Entsprechend lässt sich die zweite Empfindlichkeitsrichtung 18 zerlegen in die zweite Hauptprojektion 24 auf die Hauptmessrichtung 20 und die zweite Querprojektion 34 auf die Querrichtung 30. In der erfindungsgemäßen Sensoranordnung ist die erste Hauptprojektion 22 entgegengesetzt zur zweiten Hauptprojektion 24 und die erste Querprojektion 32 der ersten Empfindlichkeitsrichtung 14 in der gleichen Richtung wie die zweite Querprojektion 34 der zweiten Empfindlichkeitsrichtung 18 ausgerichtet. Mit anderen Worten zeichnet sich die erfindungsgemäße Sensoranordnung dadurch aus, dass wenn der Winkel α1 der ersten Empfindlichkeitsrichtung 14 zwischen 0 Grad und 90 Grad (oder zwischen 0 Grad und - 90 Grad) liegt, dann der Winkel α2 der zweiten Empfindlichkeitsrichtung 18 zwischen 90 Grad und 180 Grad (oder zwischen - 90 Grad und - 180 Grad) liegt.

Vorzugsweise ist der Winkelabstand α1 der ersten Empfindlichkeitsrichtung 14 in Bezug auf die Hauptmessrichtung 20 oder die Querrichtung 30 größer als 5 Grad, noch bevorzugter größer als 6 Grad, noch bevorzugter größer als 7 Grad, noch bevorzugter größer als 8 Grad, noch bevorzugter größer als 9 Grad und noch bevorzugter größer als 10 Grad. Das gleiche gilt für den Winkelabstand der zweiten Empfindlichkeitsrichtung 14 von der Hauptmessrichtung 20, der dazu entgegen gesetzten Richtung und der Querrichtung 30. Die Mindestwinkelabstände werden entsprechend der "Breite" der Empfindlichkeitscharakteristik (beispielsweise der Breite auf der Winkelskala bezüglichen des halben Werts der maximalen Sensorempfindlichkeit, die in der Sensor-Empfindlichkeitsrichtung vorliegt) so gewählt, dass die Längs- bzw. Querrichtung außerhalb der Breite der Empfindlichkeitscharakteristik liegt.

Der Winkel β = | α2 - α1 | zwischen der ersten und zweiten Empfindlichkeitsrichtung 14 und 18 kann beliebig unter Berücksichtigung der vorgenannten Mindestwinkelabstände von der Hauptmessrichtung 20 und der Querrichtung 30 gewählt werden. Vorzugsweise ist β jedoch 90 Grad. Die erste Empfindlichkeitsrichtung 14 kann ebenfalls unter Berücksichtigung der vorgenannten Mindestwinkelabstände frei gewählt werden und ist vorzugsweise 45 Grad oder 135 Grad. Entsprechendes gilt für die zweite Empfindlichkeitsrichtung 18, die vorzugsweise in einem Winkel α2 von 135 Grad bzw. 45 Grad ausgerichtet ist.

In der Fig. 4A wird angenommen, dass eine erste Empfindlichkeitsrichtung 14 des ersten Beschleunigungssensors 12 unter einem Winkel von + 45 Grad zur Vorwärtsrichtung 20 eines Fahrzeugs eingebaut ist, und dass ein zweiter Beschleunigungssensor 16 mit einer zweiten Empfindlichkeitsrichtung 18 unter einem Winkel von - 45 Grad in Bezug auf die Vorwärtsrichtung 20 ausgerichtet ist, ähnlich wie in der Fig. 1 und wie im linken Bereich der Fig. 4a dargestellt. Die erste und zweite Empfindlichkeitsrichtung 14, 18 können auch verschieden von ±45 Grad in Bezug auf die als Hauptmessrichtung angenommene Fahrzeuglängsachse ausgerichtet sein. Fig. 4a enthält im mittleren und rechten Teil weiterhin zwei Schaubilder für die von den Sensoren erzeugten Messsignale oder daraus abgeleitete, verarbeite Signalgrößen. Unter der Annahme eines Frontcrashs liefern beide Sensoren 12 und 16 ein positives Messsignal entsprechend des positiven Anteils der auf den ersten und zweiten Sensor 12 und 16 wirkenden Beschleunigungsvektoren. Im ersten bzw. zweiten Auswertekanal ist jeweils eine erste bzw. zweite Einsatzschwelle T1 bzw. T2 vordefiniert, sodass wenn das Messsignal F1 des ersten bzw. das Messsignal F2 des zweiten Beschleunigungssensors eine zum Erreichen der Einsatzschwelle T1 bzw. T2 genügende Auslösesignalstärke S1 bzw. S2 erreicht, im ersten bzw. zweiten Auswertekanal ein Auslösesignal für die Insassenschutzvorrichtung erzeugt wird.

Im weiteren Zeitverlauf wird angenommen, dass sich im ersten Auswertekanal der Referenzwert um einen Betrag Δ1 verändert. Beispielsweise kann dies dadurch geschehen, dass sich eine Referenzspannung erhöht, so dass ein Analog-Digitalwandler einen Offsetanteil misst. Infolge dessen verringert sich wie bildlich dargestellt der Abstand zur Einsatzschwelle T1 und es genügt ein Auslösesignal der Stärke S1', um die Einsatzschwelle T1 des ersten Auswertekanals zu erreichen. Entsprechend bewirkt die Veränderung des Referenzwertes im zweiten Auswertekanal eine Veränderung des Referenzwerts um den Wert Δ2. Dabei wird angenommen, dass die Veränderung Δ2 im zweiten Auswertekanal gleichsinnig ist wie die Veränderung Δ1 im ersten Auswertekanal.

Wird nun bei der Auswertung beispielsweise zur Bestimmung der Beschleunigungskomponente in Längsrichtung des Fahrzeugs eine Summe des Signals F1 im ersten Messkanals und des Signals S2 im zweiten Messkanals gebildet, und verglichen mit einer Einsatzschwelle T1+T2, die aus der Summe der Einsatzschwellen T1 und T2 des ersten und zweiten Auswertekanals gebildet worden ist, so führt eine Summensignalstärke S1+S2 zum Erreichen der Einsatzschwelle T1+T2. Nach der Veränderung des Referenzwerts um Δ1 im ersten Auswertekanal und um Δ2 im zweiten Auswertekanal verringern sich die Auslösesignale S1 bzw. S2 zum Erreichen der Einsatzschwellen T1 bzw. T2 in den beiden Auswertekanälen auf die Werte S1' bzw. S2'. Wie in Fig. 4A bildlich dargestellt, verringert sich die Einsatzschwelle für das Summensignal um den Wert Δ1+Δ2, so dass das Summensignal S1'+S2' genügt, um die Einsatzschwelle T1+T2 zu erreichen. Durch die Summenbildung der Signale verringert sich also der Abstand zur Einsatzschwelle in beiden Auswertekanälen gleichsinnig, so dass das Auswertesystem letztendlich in sich empfindlicher reagiert. Dies führt bei Frontaufprall-Ereignissen zu einem verfrühten Auslöseverhalten. In ähnlicher Weise würde die Veränderung des Referenzwertes zu einem verfrühten Auslöseverhalten bei Frontaufprallereignissen führen, wenn die Auswertung im ersten und zweiten Auswertekanal unabhängig voneinander erfolgte und ein erstes Auslösesignal S1 bei Überschreitung der Einsatzschwelle T1 im ersten Auswertekanal und ein zweites Auslösesignal S2 bei Überschreitung der Einsatzschwelle T2 im zweiten Auswertekanal miteinander additiv verknüpft (wie beispielsweise in einer logischen UND-Verknüpfung) und einem Schwellwertvergleich unterzogen würden. Die Veränderung des Auslöseverhaltens rührt daher, dass die Änderung des Referenzwertes in beiden Auswertekanälen gleichsinnig in Bezug auf die Einsatzschwelle wirkt. Dies rührt letztlich daher, dass die Vektorkomponente der vom ersten Sensor gemessenen Beschleunigung gleich ausgerichtet ist wie die Vektorkomponente der vom zweiten Beschleunigungssensor gemessenen Beschleunigung ist. Dies rührt letztlich daher, dass die Empfindlichkeitsrichtung des ersten und des zweiten Beschleunigungssensors jeweils eine parallel ausgerichtete Projektionskomponente auf die Hauptmessrichtung, d.h. die Richtung in der die Gesamtbeschleunigung gemessen werden soll, aufweisen.

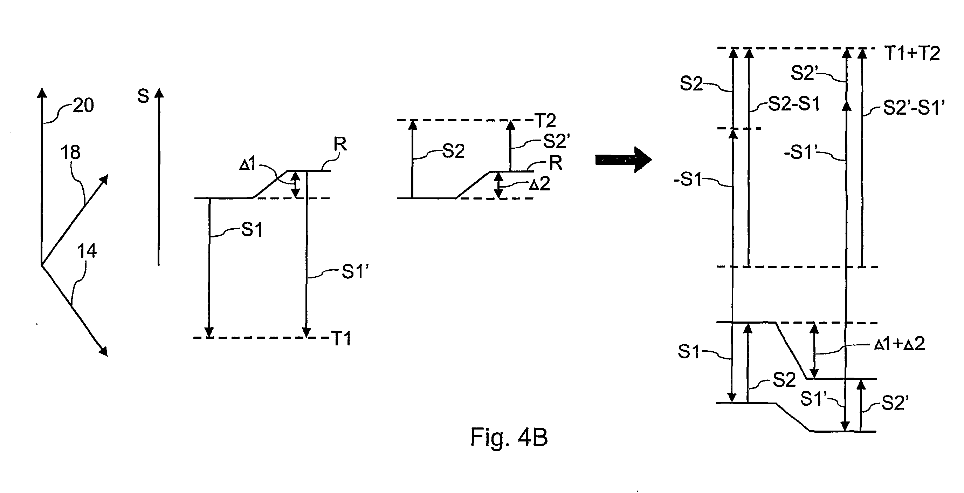

Werden der erste Beschleunigungssensor 12 und der zweite Beschleunigungssensor 14 wie oben in Bezug auf die Fig. 3 erläutert angeordnet, so erreicht man dadurch den Effekt, dass sich eine angenommene Veränderung Δ1 des Referenzwerts R1 im ersten Auswertekanal entgegengesetzt in Bezug auf die Einsatzschwelle T1 des ersten Auswertekanals auswirkt als die Änderung Δ2 des Referenzwerts im zweiten Auswertekanal in Bezug auf die Einsatzschwelle T2 des zweiten Auswertekanals. Dies ist beispielhaft in der Fig. 4B dargestellt. Der linke Teil der Fig. 4B zeigt die Anordnung der Beschleunigungssensoren ähnlich der in Fig. 2 gezeigten. Dabei weist die erste Empfindlichkeitsrichtung 14 eine erste Hauptprojektion auf die Hauptmessrichtung 20 auf, die entgegengesetzt zur Hauptmessrichtung 20 ausgerichtet ist, und die zweite Empfindlichkeitsrichtung 18 des zweiten Beschleunigungssensors weist eine zweite Hauptprojektion auf, die parallel zur Hauptmessrichtung 20 ausgerichtet ist.

Wie in den obigen Erläuterungen zur Fig. 4A wird auch in Fig. 4B angenommen, dass sich ein Frontalaufprall ereignet. Weil die erste Hauptprojektion entgegengesetzt ausgerichtet ist wie die Hauptmessrichtung (und entgegengesetzt wie in Fig. 4A), erzeugt der erste Beschleunigungssensor ein Signal F1 (nicht gezeigt) mit einem gegenüber der Situation in Fig. 4A umgekehrten Vorzeichen, das im Beispiel der Fig. 4B also negativ ist. Im Gegensatz dazu ist das vom zweiten Beschleunigungssensor 16 herrührende Signal F2 (nicht gezeigt) im Beispiel der Fig. 4B positiv. Ändert sich der Referenzwert im ersten Auswertekanal um den Betrag Δ1 und im zweiten Auswertekanal nun ähnlich wie in der Fig. 4A gleichsinnig um den Betrag Δ2, dann vergrößert sich das zum Erreichen der Einsatzschwelle T1 im ersten Auswertekanal benötigte Auslösesignal vom Wert S1 auf den Wert S1' und verkleinert sich das zum Erreichen der Einsatzschwelle T2 im zweiten Auswertekanal benötigte Auslösesignal vom Wert S2 auf den Wert S2'. Der Einfluss der Veränderungen Δ1 und Δ2 des Referenzwerts in Bezug auf die Einsatzschwellen T1 und T2 im ersten und zweiten Auswertekanal ist also für die erfindungsgemäße Sensoranordnung gegensinnig, im Unterschied zu der in Fig. 4A gezeigten Situation.

Zur Berechnung der Summe der vom ersten und zweiten Beschleunigungssensor gemessenen Komponenten der Beschleunigung in der Hauptmessrichtung 20 muss man das Vorzeichen der Signalstärke in einem Auswertekanal bezüglich der des anderen Auswertekanals umkehren. Beispielsweise wird wie in Fig. 4B das Vorzeichen der Signalstärke F1 im ersten Auswertekanal invertiert. Die in der Hauptmessrichtung 20 resultierende Komponente des Beschleunigungsvektors berechnet sich dann aus der Summe (-F1) + F2, mit anderen Worten aus der Differenz F2 - F1, der Signalwerte F2 und F1 des zweiten und ersten Beschleunigungssensors 16 und 12. Ändert sich nun der Referenzwert wie im Beispiel der Fig. 4B um den Betrag Δ1 gegensinnig zum Auslösesignal S1 des ersten Auswertekanals, so vergrößert sich das Auslösesignal vom Wert S1 auf den Wert S1'. Im zweiten Auswertekanal verändert sich der Referenzwert um den Betrag Δ2 in Richtung auf die Einsatzschwelle T2, so dass sich das Auslösesignal des zweiten Auswertekanals vom Wert S2 auf den Wert S2' verringert. Die Differenzbildung der Messsignale F2 und F1 führt dazu, dass sich der Einfluss der Veränderung des Referenzsignals in den beiden Auswertekanälen zumindest teilweise kompensiert. Im Spezialfall dass die erste Hauptmessrichtung 14 im Winkel von 135° und die zweite Hauptmessrichtung 18 im Winkel von 45° zur Hauptmessrichtung 20 angeordnet ist und dass die Beschleunigung beim Aufprall im wesentlichen genau entlang der Hauptmessrichtung verläuft, und dass die Veränderungen Δ1 und Δ2 der Referenzwerte im ersten und zweiten Auswertekanal betragsmäßig im wesentlichen gleich groß sind, kompensieren sich die Einflüsse der Veränderungen Δ1 und Δ2 der Referenzwerte in den beiden Auswertekanälen vollständig.

Die zumindest teilweise Fehlerkompensation ist im Prinzip in der rechten Teilfigur der Fig. 4B dargestellt. Wie man sieht, kompensieren sich in der Kombination des ersten mit dem zweiten Auswertekanals die Veränderungen der Abstände zur Einsatzschwelle T1 + T2 durch das Bilden der Differenz der Messsignale F2 - F1 (nicht gezeigt) und entsprechend der Differenz S2 - S1 der Auslösesignale. Wenn die Änderung Δ1 des Referenzsignals im ersten Auswertekanal also entgegengesetzt ist wie die Änderung Δ2 des Referenzsignals im zweiten Auswertekanal, dann führt die Bildung der Differenz der Signale F2 und F1 im ersten und zweiten Auswertekanal zu einer zumindest teilweisen Kompensation der Veränderungen Δ1 und Δ2 der Referenzwerte in Bezug auf die Einsatzschwellen T1 und T2 im ersten und zweiten Auswertekanal. Dadurch verändert sich das Auslöseverhalten weniger stark als im Vergleich zu der Situation in Fig. 4A mit der Sensoranordnung nach dem Stand der Technik, und im oben beschriebenen Spezialfall verändert sich das Auslöseverhalten gar nicht.

Zum Erzielen des für die Stabilität des Auswerteverfahrens günstigen, zumindest teilweisen Kompensation des Einflusses der Veränderung der Referenzwerte in den beiden Auswertekanälen kann alternativ zur Differenzbildung der Signale F2 und F1 bei Schwellwertvergleich mit der Summe T2 + T1 der Einsatzschwellen im zweiten und ersten Auswertekanals alternativ auch eine Summenbildung der Signalstärken bei gleichzeitigem Schwellwertvergleich mit der Differenz T2 - T1 der Einsatzschwellen im Auswerteverfahren angewendet werden.

Wenn der Winkelabstand der ersten Empfindlichkeitsrichtung 14 zur Querrichtung 30 der Hauptmessrichtung 20 betragsmäßig verschieden ist vom Winkelabstand der zweiten Empfindlichkeitsrichtung 18 zur Querrichtung zur Hauptmessrichtung 20, dann kann anstelle der oben zur Veranschaulichung beispielhaft dargestellten, gewöhnlichen Differenz- bzw. Summenbildung der Messsignale oder Einsatzschwellen zur besseren Kompensation eines Einflusses der Veränderung der Referenzwerte der Signale auch eine gewichtete Differenzbildung bzw. gewichtete Summenbildung der Messsignale bei gleichzeitigem Schwellwertvergleich mit einer gewichteten Summen bzw. gewichteten Differenz der Einsatzschwellen im ersten und zweiten Auswertekanal vorgesehen werden.

Die Summen- bzw. Differenzbildung kann direkt auf die vom ersten und zweiten Sensor gelieferten Messsignale angewendet werden. Die Summen- bzw. Differenzbildung kann auch angewendet werden auf ein möglicherweise gefiltertes Messsignal, beispielsweise auf ein durch einen Tiefpass geglättetes oder ein durch eine Integrationsschaltung integriertes Messsignal, allgemein also auf ein verarbeitetes Signal F1 und F2 (nicht gezeigt), jedenfalls solange die Verarbeitung durch eine lineare oder zumindest monotone Funktion darstellbar ist.

Unter einer gewichteten Differenzbildung bzw. gewichteten Summenbildung des verarbeiteten ersten Signals F1 im ersten Messkanal und des verarbeiteten zweiten Signals F2 im zweiten Messkanal wird hierin ein Ausdruck von der Form:
a1*F1 - a2*F2 bzw. a1*F1 + a2*F2
verstanden, wobei a1 und a2 Normierungsfaktoren sind, die zwischen Null und 1 liegen können (d.h. 0 < a1, a2 < 1). Entsprechend versteht man unter einer gewichteten Schwellensummenfunktion bzw. Schwellendifferenzfunktion der ersten Einsatzschwelle T1 im ersten Auswertekanal und der zweiten Einsatzschwelle T2 im zweiten Auswertekanal einen Ausdrucke der Form:
b1*T1 + b2*T2 bzw. b1*T1 - b2*T2,
wobei b1 und b2 Normierungsfaktoren sind, die zwischen Null und 1 liegen können (d.h. 0 < b1, b2 < 1).

Eine besonders vollständige Kompensation des Einflusses der Veränderung des Referenzwerts in den beiden Auswertekanälen ergibt sich dann, wenn die Normierungsfaktoren a1 bzw. a2 abhängig von den Winkeln α1 bzw. α2 der ersten bzw. zweiten Empfindlichkeitsrichtung 14 bzw. 18 zur Hauptmessrichtung 20 wie folgt gewählt werden:
a1 ≈ cos α1 und a2 ≈ cos α2.

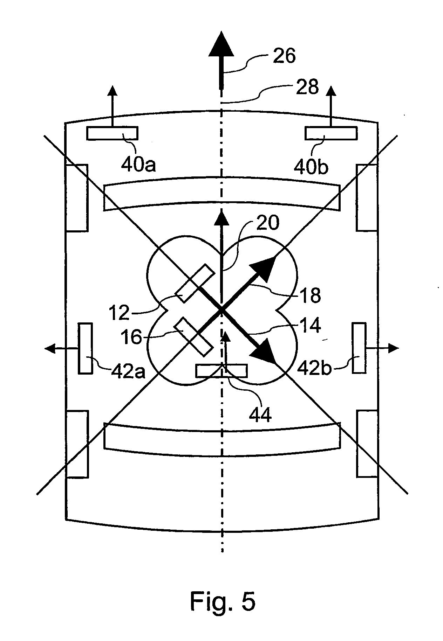

Es ist in Kraftfahrzeugen besonders vorteilhaft, wenn die erfindungsgemäße Sensoranordnung zusammen mit Mitteln zur Auswertung der Sensorsignale in einem gemeinsamen zentralen Steuergerät untergebracht ist. Besonders vorteilhaft ist das Steuergerät an einer im wesentlichen zentralen Position im Kraftfahrzeug angeordnet. In der Praxis werden jedoch, insbesondere zur Erfüllung der Anforderungen in der mittleren und gehobenen Fahrzeugklasse, weitere Satellitensensoren im Fahrzeug angeordnet, um Aufprallereignisse mit verschiedenen Stossrichtungen besonders empfindlich oder genau messen zu können. Eine erweiterte Sensoranordnung ist in Fig. 5 beispielhaft dargestellt. Die erweiterte Sensoranordnung umfasst über den zentral angeordneten ersten Beschleunigungssensor 12 mit erster Empfindlichkeitsrichtung 14 und dem zweiten Beschleunigungssensor 16 mit zweiter Empfindlichkeitsrichtung 18, zusätzlich an der Vorderseite des Fahrzeugs angeordnete sogenannte Upfront-Sensoren 40 mit in Vorwärtsrichtung 26 des Fahrzeugs ausgerichteter Empfindlichkeitsrichtung (beispielsweise einen linken Upfront-Sensor 40a und einen rechten Upfront-Sensor 40b), an den Seiten des Fahrzeugs angebrachte Seitensensoren 42 mit quer zur Fahrzeuglängsachse ausgerichteter Empfindlichkeitsrichtung (beispielsweise einen an der linken Fahrzeugseite angeordneten linken Seitensensor 42a mit nach links ausgerichteter Empfindlichkeitsrichtung und einen an der rechten Fahrzeugseite angeordneten rechten Seitensensor 42b mit nach rechts ausgerichteter Empfindlichkeitsrichtung), und schließlich einen beispielsweise im Zentralsteuergerät angeordneten Sensor (ein so genannter Safing-Sensor 44).

In der mittleren und höheren Wagenklasse wird derzeit häufig Auslösestrategie der Anmelderin angewendet, um die Signale der im Zentralgerät angeordneten ersten und zweiten Sensoren auszuwerten und mit den Signalen der Upfront-, Seiten- oder Safing-Sensoren zur Erzeugung eines Auslösesignals für entsprechende Insassenschutzvorrichtungen zu verknüpfen. Entsprechend dieser Auswertestrategie werden unterschiedliche Insassenschutzvorrichtungen in Abhängigkeit von der Richtung des Aufprallereignisses angesteuert und gegebenenfalls ausgelöst. Dabei wird den Signalen bestimmter, für entsprechende Aufprallrichtung besonders geeignete Sensoren gezielt ein dominanterer Einfluss im Vergleich zu den Signalen der anderen Sensoren zugewiesen. Beispielsweise wird bei Frontalaufprallereignissen den Signalen der Upfront-Sensoren 40 im Vergleich zu den Signalen der Seitensensoren 42 ein dominanterer Einfluss bei der Erzeugung des Auslösesignals für einen vor einem Insassen angebrachten Airbagsystem zugewiesen. Entsprechend werden seitlich der Insassen angeordnete Seiten-Airbagsysteme zum Schutz bei Aufprallereignissen mit Stossrichtung von der Seite ausgelöst durch Auslösesignale, bei deren Erzeugung die Messsignale der Seitensensoren 42 einen dominanteren Einfluss haben als die Signale der Upfront-Sensoren 40.

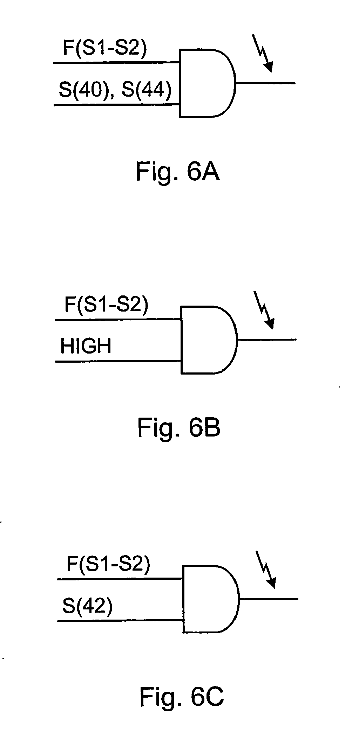

Die erfindungsgemäße Vorrichtung mit einem ersten und zweiten Sensor ist in der oben erwähnten Auslösestrategie leicht und besonders vorteilhaft zu integrieren. In Abhängigkeit von der Stossrichtung des Aufprallereignisses werden in dieser Auslösestrategie für die Fälle eines Aufpralls von vorne, von der Seite bzw. von hinten die von aus den beiden erfindungsgemäß angeordneten Sensoren abgeleiten Auslösesignale in unterschiedlicher Weise zur Erzeugung einer Plausibilisierung verknüpft mit Auslösesignalen, die von den anderen in Fig. 5 gezeigten Sensoren abgeleitet worden sind, wie in den Figuren 6A, 6B und 6C dargestellt.

Bei einem Frontalaufprall kann zur Erzeugung eines Gesamtauslösesignals ein aus den beiden erfindungsgemäß angeordneten Sensoren erfindungsgemäß abgeleitetes Auslösesignal f(S1-S2), das beispielsweise durch Differenzbildung der verarbeiteten Signale des ersten Auswertekanals und des zweiten Auswertekanals erzeugt worden ist, so mit der Information eines Upfront-Sensors 40 oder eines Safing-Sensors 44 verknüpft, dass die Upfront- bzw. Safing-Sensoren eine Plausibilisierung der von den erfindungsgemäß angeordneten Sensoren liefert. Insbesondere ist in der erwähnten Auslösestrategie eine logische UND-Verknüpfung zur Erzeugung des plausibilisierten Gesamtauslösesignals für Front-Airbagsystem vorgesehen, wie in der Fig. 6A dargestellt.

Bei einem Heckaufprall ist in der Auslösestrategie bei der Erzeugung eines Gesamtauslösesignals keine Plausibilisierung der von den beiden erfindungsgemäß angeordneten Beschleunigungssensoren abgeleiteten Auslösesignale mit den von den übrigen Sensoren abgeleiteten Auslösesignale vorgesehen. In Fig. 6B ist dies dadurch kenntlich gemacht, dass bei der logischen UND-Verknüpfung das Plausibilisierungssignal konstant auf logisch "HOCH" gesetzt ist, so dass das von den beiden erfindungsgemäß angeordneten Sensoren abgeleitete Auslösesignal f(S1-S2) auch das Gesamtauslösesignal für eine bei einem Heckaufprall geeignet auszulösende Schutzvorrichtung liefert.

Schließlich kann bei einem Seitenaufprall zur Erzeugung eines Auslösesignals von den beiden erfindungsgemäß angeordneten Beschleunigungssensoren erfindungsgemäß abgeleitetes Auslösesignal f(S1-S2) mit den Informationen der Seitensensoren 42 plausibilisierend verknüpft werden. Insbesondere ist in der Auslösestrategie, wie in der Fig. 6C dargestellt, zur Erzeugung des plausibilisierten Gesamtauslösesignals für ein Seiten-Airbagsystem eine logische UND-Verknüpfung des Auslösesignal f(S1-S2) mit einem von den Seitensensoren 42 abgeleiteten Auslösesignal vorgesehen.

Bei Kraftfahrzeugen lässt sich die erfindungsgemäße Sensoranordnung mit einer entsprechenden erfindungsgemäß angepassten Auswertung der verarbeiteten Signale im ersten und zweiten Auswertekanal besonders vorteilhaft einsetzen für den Fall, dass die Hauptmessrichtung 20 in Richtung der Längsachse 28 des Fahrzeugs liegt. Für die Auswertung von Frontalaufprallereignissen hat eine mögliche Veränderung der Referenzwerte im ersten und zweiten Auswertekanal, wie oben bezugnehmend auf Fig. 4B erläutert, bei einer erfindungsgemäßen Sensoranordnung wie oben bezugnehmend auf Fig. 3 erläutert, besonders geringe Auswirkungen. Andererseits steigt bei der besonders vorteilhaften Sensoranordnung nach Fig. 2 die Störempfindlichkeit bei Änderungen der Referenzwerte bei Seitenaufprallereignissen. Denn für solche Aufprallszenarien liegt die Stossrichtung des Aufpralls in Bezug auf den ersten und zweiten Sensor ähnlich wie in der Fig. 1 gezeigt, und für die Messsignale, Auslösesignale und Einsatzschwellen im ersten und zweiten Auswertekanal liegt eine Situation ähnlich wie in der Fig. 4A dargestellt vor. Die daraus möglicherweise resultierende Änderung des Auslöseverhaltens der Sicherheitsvorrichtung wird bei einer Plausibilisierung der von den beiden erfindungsgemäß angeordneten Sensoren abgeleiteten Auslöseinformation mit den von den weiteren Sensoren abgeleiteten Auslöseinformationen verringert oder vermieden, wenn die im Seitenbereich angeordneten Seitensensoren bei der Erzeugung des Gesamtauslösesignals einen dominanteren Einfluss haben als die erfindungsgemäß angeordneten Sensoren.

Wenn die beiden erfindungsgemäß ausgerichteten Sensoren an einer im wesentlichen zentral im Fahrzeug angeordneten Position angeordnet sind, beispielsweise in einem zentral angeordneten Steuergerät, dann ergibt sich ein dominanterer Einfluss der im Seitenbereich angeordneten Seitensensoren bei der Detektion eines Seitenaufpralls im Verhältnis zu den übrigen Sensoren bereits daraus, dass die Seitensensoren bei einem Seitenaufprall näher am Aufprallpunkt sind und die Beschleunigung frühzeitiger und unmittelbarer detektieren als die weiter vom seitlichen Aufprallpunkt entfernt liegenden zentral angeordneten ersten und zweiten Sensoren (und die ebenso zur Messung von Beschleunigungen entlang der Fahrzeuglängsachse vorgesehenen Upfront- und Safing-Sensoren). Aufgrund des schlechteren Signalübertragungswegs unter anderem durch die "weichere" Knautschzone quer zur Fahrzeuglängsachse (im Vergleich zur Knautschzone entlang der Fahrzeuglängsachse) spielen die zur Messung von Beschleunigungen entlang der Fahrzeuglängsachse vorgesehenen Sensoren also eine untergeordnete Rolle im Vergleich zu den Seitensensoren.

Ein Vorteil, der mit der erfindungsgemäßen Sensoranordnung und Signalauswertung erreicht wird, ist eine Erhöhung der Stabilität des Auswertealgorithmus und damit verbunden eine Erhöhung der Sicherheit gegenüber Einfachfehlern. Ein weiterer Vorteil ist, dass insbesondere bei einer Verknüpfung bzw. Plausibilisierung mit den weiteren Sensoren nach der oben erwähnten und derzeit eingesetzten Auslösestrategie auf den als Triggerschalter dienenden Safing-Sensor bei Sicherstellung einer ausreichenden Systemzuverlässigkeit hinsichtlich des Auslöseverhaltens bei Front- bzw. Heckaufprall-Ereignissen verzichtet werden kann.

### Liste der Bezugszeichen

- 10: Messvorrichtung
- 12: erster Beschleunigungssensor
- 14: erste Empfindlichkeitsrichtung
- 16: zweiter Beschleunigungssensor
- 18: zweite Empfindlichkeitsrichtung
- 20: Hauptmessrichtung
- 22: erste Hauptprojektion
- 24: zweite Hauptprojektion
- 26: Vorwärtsrichtung des Fahrzeugs
- 28: Längsachse des Fahrzeugs
- 30: Querrichtung
- 32: erste Querprojektion
- 34: zweite Querprojektion
- α1: Winkel zwischen Hauptmessrichtung und erster Empfindlichkeitsrichtung
- α2: Winkel zwischen Hauptmessrichtung und zweiter Empfindlichkeitsrichtung
- β: Winkel zwischen erster und zweiter Empfindlichkeitsrichtung |α1 - α2|
- 40, 40a, 40b: Upfront-Sensor; linker und rechter Upfront-Sensor
- 42, 42a, 42b: Seitensensor; linker und rechter Seitensensor
- 44: Safing-Sensor
- F1: verarbeitetes Signal des ersten Beschleunigungssensors
- F2: verarbeitetes Signal des zweiten Beschleunigungssensors
- T1: Einsatzschwelle des ersten Auswertekanals
- T2: Einsatzschwelle des zweiten Auswertekanals
- S1: Auslösesignal des ersten Auswertekanals
- S2: Auslösesignal des zweiten Auswertekanals
- R1: Referenzsignal des ersten Auswertekanals
- R2: Referenzsignal des zweiten Auswertekanals
- Δ1: Änderung des Referenzsignals im ersten Auswertekanal
- Δ2: Änderung des Referenzsignals im zweiten Auswertekanal

## Patentansprüche

1. Vorrichtung (10) zur Messung von Beschleunigungen für ein Fahrzeug-Insassenschutzsystem, wobei die Vorrichtung für eine vorbestimmte Hauptmessrichtung (20) angepasst ist und umfasst:
mindestens einen ersten Beschleunigungssensor (12) mit einer ersten Empfindlichkeitsrichtung (14), die in ihrer Projektion auf die Hauptmessrichtung (20) eine erste Hauptprojektion (22) und in ihrer Projektion auf eine senkrecht zur Hauptmessrichtung (20) ausgerichtete Querrichtung (30) eine erste Querprojektion (32) bildet, und einem ersten Auswertekanal zur Verarbeitung eines ersten Messsignals des ersten Beschleunigungssensors bezüglich eines ersten Referenzwertes (R1);
einen zweiten Beschleunigungssensor (16) mit einer zweiten Empfindlichkeitsrichtung (18), die in ihrer Projektion auf die Hauptmessrichtung (20) eine zweite Hauptprojektion (24) und in ihrer Projektion auf die Querrichtung (30) eine zweite Querprojektion (34) bildet, und einem zweiten Auswertekanal zur Verarbeitung eines zweiten Messsignals des zweiten Beschleunigungssensors bezüglich eines zweiten Referenzwertes (R2); und
Auswertemittel zur Auswertung von zumindest dem verarbeiteten ersten Messsignal (F1) und dem verarbeiteten zweiten Messsignal (F2) und zumindest teilweise darauf begründeter Erzeugung eines Auslösesignals für das Insassenschutzsystem; **dadurch gekennzeichnet, dass**
die erste und zweite Querprojektion (32, 34) der ersten und zweiten Empfindlichkeitsrichtungen (14, 18) parallel zueinander und die erste und zweite Hauptprojektion (22, 24) der ersten und zweiten Empfindlichkeitsrichtungen (14, 18) antiparallel zueinander ausgerichtet sind, und wobei
die Auswertung so ausgeführt wird, dass sich eine zumindest teilweise Fehlerkompensation ergibt, wenn sich der erste bzw. zweite Referenzwert (R1, R2) im ersten bzw. zweiten Auswertekanal verändern.

2. Vorrichtung nach Anspruch 1,
**dadurch gekennzeichnet, dass**
die Auswertung in Abhängigkeit von der Ausrichtung der ersten und zweiten Empfindlichkeitsrichtung zur Hauptmessrichtung so ausgeführt wird, dass die Fehlerkompensation bei der Veränderung des ersten und zweiten Referenzwerts (Δ1, Δ2) maximal ist.

3. Vorrichtung nach Anspruch 1 oder 2,
**dadurch gekennzeichnet, dass**
der erste Auswertekanal eine erste Einsatzschwelle (T1) und der zweite Auswertekanal eine zweite Einsatzschwelle (T2) umfasst, und wobei die Auswertung einen Vergleich einer ersten Auswertefunktion des verarbeiteten ersten Messsignals (F1) und des verarbeiteten zweiten Messsignals (F2) mit einer zweiten Auswertefunktion der ersten Einsatzschwelle (T1) und der zweiten Einsatzschwelle (T2) umfasst.

4. Vorrichtung nach Anspruch 3,
**dadurch gekennzeichnet, dass**
die erste Auswertefunktion eine gewichtete Differenz bzw. Summe des verarbeiteten ersten Messsignal (F1) und des verarbeiteten zweiten Messsignal (F2) ist, und die entsprechende zweite Auswertefunktion eine gewichtete Summe bzw. Differenz der ersten Einsatzschwelle (T1) und der zweiten Einsatzschwelle (T2) ist.

5. Vorrichtung nach einem der vorhergehenden Ansprüche,
**dadurch gekennzeichnet, dass**
der erste Referenzwert (R1) und der zweite Referenzwert (R2) ein dem ersten und zweiten Auswertekanal gemeinsamer Referenzwert sind.

6. Vorrichtung nach einem der vorhergehenden Ansprüche,
**dadurch gekennzeichnet, dass**
der Winkelabstand der ersten Empfindlichkeitsrichtung (14) und der der zweiten Empfindlichkeitsrichtung (18) sowohl zur Hauptmessrichtung (20) als auch zur Querrichtung ungleich 0° oder 90°, insbesondere größer oder gleich 10° sind.

7. Vorrichtung nach einem der vorhergehenden Ansprüche,
**dadurch gekennzeichnet, dass**
der Winkelabstand zwischen der ersten Empfindlichkeitsrichtung (14) und der der zweiten Empfindlichkeitsrichtung (18) im wesentlichen 90° ist.

8. Vorrichtung nach einem der vorhergehenden Ansprüche,
**dadurch gekennzeichnet, dass**
der Winkel der ersten Empfindlichkeitsrichtung (14) zur Hauptmessrichtung (20) im wesentlichen 45° bzw. 135° oder -45° bzw. -135 ° oder 225 ° bzw. 315 ° und der Winkel der zweiten Empfindlichkeitsrichtung (18) zur Hauptmessrichtung (20) im wesentlichen 135° bzw. 45° oder -135 ° bzw. -45° oder 315° bzw. 225 ° ist.

9. Vorrichtung nach einem der Ansprüche 1 bis 8,
**dadurch gekennzeichnet, dass**
die Hauptmessrichtung (20) im wesentlichen die Vorwärtsrichtung (26) des Fahrzeugs ist.

10. Vorrichtung nach einem der Ansprüche 1 bis 8,
**dadurch gekennzeichnet, dass**
die Hauptmessrichtung (20) im wesentlichen senkrecht zur Vorwärtsrichtung (26) des Fahrzeugs ist.

11. Vorrichtung nach einem der vorhergehenden Ansprüche,
**dadurch gekennzeichnet, dass**
der erste und zweite Beschleunigungssensor (12, 16) und die Auswertemittel in einem Zentralgerät angeordnet sind.

12. Vorrichtung nach einem der vorhergehenden Ansprüche,
**dadurch gekennzeichnet, dass**
sie ferner wenigstens einen Upfront-Sensor (40) oder wenigstens einen Seitensensor (42) oder einen Safing-Sensor (44) umfasst.

13. Verfahren zur Messung von Beschleunigungen für ein Fahrzeug-Insassenschutzsystem mit den folgenden Schritten:
i) Festlegen einer Hauptmessrichtung (20) in Bezug auf eine Vorwärtsrichtung (26) eines Fahrzeugs;
ii) Bereitstellen eines ersten Beschleunigungssensors (12) mit einer ersten Empfindlichkeitsrichtung (14), die in ihrer Projektion auf die Hauptmessrichtung (20) eine erste Hauptprojektion (22) und in ihrer Projektion auf eine senkrecht zur Hauptmessrichtung (20) ausgerichteten Querrichtung (30) eine erste Querprojektion (32) bildet;
iii) Bereitstellen eines zweiten Beschleunigungssensors (16) mit einer zweiten Empfindlichkeitsrichtung (18), die in ihrer Projektion auf die Hauptmessrichtung (20) eine zweite Hauptprojektion (24) und in ihrer Projektion auf die Querrichtung (30) eine zweite Querprojektion (34) bildet;
wobei die erste und zweite Querprojektion (32, 34) der ersten und zweiten Empfindlichkeitsrichtung (14, 18) parallel zueinander und
die erste und zweite Hauptprojektion (22, 24) der ersten und zweiten Empfindlichkeitsrichtung (14, 18) antiparallel zueinander ausgerichtet sind;
iv) Verarbeiten des ersten Messsignals des ersten Beschleunigungssensors (12) zur Bildung eines ersten verarbeiteten Signals (F1) bezüglich eines ersten Referenzwertes (R1) in einem ersten Auswertekanal zur Verarbeitung eines ersten Signals des ersten Beschleunigungssensors (12);
v) Verarbeiten des zweiten Messsignals des zweiten Beschleunigungssensors (16) zur Bildung eines zweiten verarbeiteten Signals (F2) bezüglich eines zweiten Referenzwertes (R2) in einem zweiten Auswertekanal zur Verarbeitung eines zweiten Signals des zweiten Beschleunigungssensors (16);
vi) Auswerten des ersten und zweiten verarbeiteten Signals (F1, F2) in Bezug auf die entsprechende erste und zweite Einsatzschwelle (T1, T2), so dass sich eine zumindest teilweise Fehlerkompensation ergibt, wenn sich der erste und zweite Referenzwert (R1, R2) im ersten bzw. zweiten Auswertekanal verändern.

14. Verfahren nach Anspruch 13,
**dadurch gekennzeichnet, dass**
die Auswertung in Abhängigkeit von der Ausrichtung der ersten und zweiten Empfindlichkeitsrichtung zur Hauptmessrichtung gestaltet ist, so dass die Fehlerkompensation bei der Veränderung des ersten und zweiten Referenzwerts maximal ist.

15. Verfahren nach Anspruch 13 oder 14,
**dadurch gekennzeichnet, dass**
die Auswertung in Schritt vi) umfasst:
a) Bilden einer gewichteten Schwellensummenfunktion bzw. Schwellendifferenzfunktion der ersten Einsatzschwelle (T1) und der zweiten Einsatzschwelle (T2);
b) Bilden einer gewichteten Differenzfunktion bzw. Summenfunktion des verarbeiteten ersten Messsignals (F1) und des verarbeiteten zweiten Messsignals (F2);
c) Vergleichen der gewichteten Differenzfunktion bzw. Summenfunktion aus Schritt b) mit der gewichteten Schwellensummenfunktion bzw. Schwellendifferenzfunktion aus Schritt a); und wobei ferner
das Auslösesignal in den Zustand zum Auslösen gesetzt wird, wenn die gewichtete Differenzfunktion bzw. Summenfunktion aus Schritt b) die gewichtete Schwellensummenfunktion bzw. Schwellendifferenzfunktion aus Schritt a) überschreitet.

16. Verfahren nach einem der Ansprüche 13 bis 15,
**dadurch gekennzeichnet, dass**
in Schritt b) die gewichtete Differenzfunktion bzw. Summenfunktion des verarbeiteten ersten Messsignals (F1) und des verarbeiteten zweiten Messsignals (F2) die Form
a1*F1 - a2*F2 bzw. a1*F1 + a2*F2
aufweist und a1 und a2 Normierungsfaktoren mit 0 < a1, a2 < 1 sind, und in Schritt a) die gewichtete Schwellensummenfunktion bzw. Schwellendifferenzfunktion der ersten Einsatzschwelle (T1) und der zweiten Einsatzschwelle (T2) die Form
b1*T1 + b2*T2 bzw. b1*T1 - b2*T2
aufweist und b1 und b2 Normierungsfaktoren mit 0 < b1, b2 < 1 sind.

17. Verfahren nach Anspruch 16,
**dadurch gekennzeichnet, dass**
a1 ≈ cos α1 und a2 ≈ cos α2
wobei α1 der Winkel zwischen der Hauptmessrichtung (20) und der ersten Empfindlichkeitsrichtung (14) und α2 der Winkel zwischen der Hauptmessrichtung (20) und der zweiten Empfindlichkeitsrichtung (18) ist.

18. Verfahren nach einem der Ansprüche 13 bis 17,
**dadurch gekennzeichnet, dass**
der erste Referenzwert (R1) und der zweite Referenzwert (R2) ein dem ersten und zweiten Auswertekanal gemeinsamer Referenzwert sind.

19. Verfahren nach einem der Ansprüche 13 bis 18,
**dadurch gekennzeichnet, dass**
in den Schritten iv) und v) das Verarbeiten des ersten bzw. Messsignals des ersten bzw. Beschleunigungssensors (12, 16) mindestens eine Integration des Messsignals umfasst.

## Claims

1. A device (10) for measuring accelerations for a vehicle passenger protection system, wherein the device is adapted for a prespecified main direction of measurement (20) and comprises:
at least one first acceleration sensor (12) with a first direction of sensitivity (14), which in its projection onto the main direction of measurement (20) forms a first main projection (22), and in its projection onto a transverse direction (30) which is aligned vertically to the main direction of measurement (20) forms a first transverse projection (32), and a first evaluation channel for processing a first measurement signal from the first acceleration sensor in relation to a first reference value (R1)
a second acceleration sensor (16) with a second direction of sensitivity (18), which in its projection onto the main direction of measurement (20) forms a second main projection (24), and in its projection onto the transverse direction (30) forms a second transverse projection (34), and a second evaluation channel for processing a second measurement signal from the second acceleration sensor in relation to a second reference value (R2), and
evaluation means for evaluating at least the processed first measurement signal (F1) and the processed second measurement signal (F2), and the generation of a trigger signal for the passenger protection system which is at least partially based on this, wherein
the first and second transverse projection (32, 34) of the first and second direction of sensitivity (14, 18) are aligned in parallel to each other, and the first and second main projection (22, 24) of the first and second directions of sensitivity (14, 18) are aligned antiparallel to each other, and wherein
the evaluation is conducted in such a manner that error compensation occurs at least partially when the first or second reference value (R1 or R2) changes in the first or second evaluation channel.

2. A device according to claim 1
**characterized in that**
the evaluation in dependence on the alignment of the first and second direction of sensitivity to the main direction of measurement is executed in such a manner that the error compensation is maximal when the first and second reference value (Δ1 and Δ2) changes.

3. A device according to either of claims 1 or 2
**characterized in that**
the first evaluation channel comprises a first utilisation threshold (T1) and the second evaluation channel comprises a second utilisation threshold (T2), and wherein the evaluation comprises a comparison of a first evaluation function of the processes first measurement signal (F1) and the processed second measurement signal (F2) with a second evaluation function of the first utilisation threshold (T1) and the second utilisation threshold (T2).

4. A device according to claim 3
**characterized in that**
the first evaluation function is a weighted difference or total of the processed first measurement signal (F1) and the processed second measurement signal (F2) and the corresponding second evaluation function is a weighted total or difference of the first utilisation threshold (T1) and the second utilisation threshold (T2).

5. A device according to any one of the preceding claims
**characterized in that**
the first reference value (R1) and the second reference value (R2) are a reference value shared by the first and second evaluation channel.

6. A device according to any one of the preceding claims
**characterized in that**
the angle distance of the first direction of sensitivity (14) and that of the second direction of sensitivity (18) are not equal to 0° or 90° both in relation to the main direction of measurement (20) and to the transverse direction, and are in particular larger than or equal to 10°.

7. A device according to any one of the preceding claims
**characterized in that**
the angle distance between the first direction of sensitivity (14) and that of the second direction of sensitivity (18) is essentially 90°.

8. A device according to any one of the preceding claims
**characterized in that**
the angle of the first direction of sensitivity (14) to the main direction of measurement (20) is essentially 45° and 135°, or -45° and -135°, or 225° and 315°, and the angle of the second direction of sensitivity (18) to the main direction of measurement (20) is essentially 135° and 45° or -135° and -45°, or 315° and 225°.

9. A device according to any one of claims 1 to 8
**characterized in that**
the main direction of measurement (20) is essentially the forwards direction (26) of the vehicle.

10. A device according to any one of claims 1 to 8
**characterized in that**
the main direction of measurement (20) is essentially vertical to the forwards direction (26) of the vehicle.

11. A device according to any one of the preceding claims
**characterized in that**
the first and second acceleration sensor (12, 16) and the evaluation means are arranged in a central unit.

12. A device according to any one of the preceding claims
**characterized in that**
it furthermore comprises at least one upfront sensor (40) or at least one side sensor (42) or a safing sensor (44).

13. A procedure for measuring accelerations for a vehicle passenger protection system with the following stages:
i) determination of a main direction of measurement (20) in relation to a forwards direction (26) of a vehicle;
ii) the provision of a first acceleration sensor (12) with a first direction of sensitivity (14) which in its projection onto the main direction of measurement (20) forms a first main projection (22), and in its projection onto a transverse direction (30) which is vertical to the main direction of measurement (20) forms a first transverse projection (32);
iii) the provision of a second acceleration sensor (16) with a second direction of sensitivity (18) which in its projection onto the main direction of measurement (20) forms a second main projection (24) and in its projection onto the transverse direction (30) forms a second transverse projection (34), wherein the first and second transverse projection (32, 34) of the first and second direction of sensitivity (14, 18) are aligned parallel to each other, and the first and second main projection (22, 24) of the first and second direction of sensitivity (14, 18) are aligned antiparallel to each other;
iv) the processing of the first measurement signal from the first acceleration sensor (12) to form a first processed signal (F1) in relation to a first reference signal (R1) in a first evaluation channel for processing a first signal of the first acceleration sensor (12);
v) the processing of the second measurement signal of the second acceleration sensor (16) to form a second processed signal (F2) in relation to a second reference value (R2) in a second evaluation channel for processing a second signal of the second acceleration sensor (16);
vi) the evaluation of the first and second processed signal (F1 and F2) in relation to the corresponding first and second utilisation threshold (T1 and T2), so that at least a partial error compensation occurs, when the first and second reference value (R1 and R2) in the first or second evaluation channel change.

14. A procedure according to claim 13
**characterized in that**
the evaluation in dependence on the alignment of the first and second direction of sensitivity to the main direction of measurement is designed in such a way that the error compensation is maximal when the first and second reference value changes.

15. A procedure according to either claim 13 or 14
**characterized in that**
the evaluation in stage vi) comprises:
a) the formation of a weighted threshold total function or threshold difference function of the first utilisation threshold (T1) and the second utilisation threshold (T2);
b) the formation of a weighted difference function or total function of the processes first measurement signal (F2) and the processed second measurement signal (F2);
c) a comparison of the weighted difference function or total function from stage b) with the weighted threshold total function or threshold difference function from stage a), and wherein furthermore, the trigger signal is set to the condition for triggering when the weighted difference function or total function from stage b) exceeds the weighted threshold total function or threshold difference function from stage a).

16. A procedure according to any one of claims 13 to 15
**characterized in that**
in stage b), the weighted difference function or total function of the processed first measurement signal (F1) and the processed second measurement signal (F2) takes the from
a1*F1 - a2*F2 or a1*F1 + a2*F2
and a1 and a2 are norming factors with 0 < a1, a2 < 1, and in stage a), the weighted threshold total function or threshold difference function of the first utilisation threshold (T1) and the second utilisation threshold (T2) takes the form
b1*T1 + b2*T2 or b1*T1 - b2*T2
and b1 and b2 are norming factors with 0 < b1, b2 < 1.

17. A procedure according to claim 16
**characterized in that**
a1 = cos α1 and a2 = cos α2
wherein α1 is the angle between the first direction of measurement (20) and the first direction of sensitivity (14) and α2 is the angle between the main direction of measurement (20) and the second direction of sensitivity (18).

18. A procedure according to any one of claims 13 to 17
**characterized in that**
the first reference value (R1) and the second reference value (R2) are a reference value which is shared between the first and second evaluation channel.

19. A procedure according to any one of claims 13 to 18
**characterized in that**
in stages iv) and v), the processing of the first or measurement signal of the first or acceleration sensor (12 and 16) comprises at least one integration of the measurement signal.

## Revendications

1. Dispositif (10) pour la mesure d'accélérations pour un système de protection d'occupants de véhicule, le dispositif étant adapté pour une direction de mesure principale (20) prédéfinie et englobant :
au moins un premier capteur d'accélération (12) avec une première direction de sensibilité (14) qui, dans sa projection sur la direction de mesure principale (20), forme une première projection principale (22) et, dans sa projection sur une direction transversale (30) orientée perpendiculairement à la direction de mesure principale (20), forme une première projection transversale (32), et avec une première voie d'analyse pour le traitement d'un premier signal de mesure du premier capteur d'accélération par rapport à une première valeur de référence (R1);
un deuxième capteur d'accélération (16) avec une deuxième direction de sensibilité (18) qui, dans sa projection sur la direction de mesure principale (20), forme une deuxième projection principale (24) et, dans sa projection sur la direction transversale (30), forme une deuxième projection transversale (34), et avec une deuxième voie d'analyse pour le traitement d'un deuxième signal de mesure du deuxième capteur d'accélération par rapport à une deuxième valeur de référence (R2) ; et des moyens d'analyse pour l'analyse d'au moins le premier signal de mesure traité (F1) et du deuxième signal de mesure traité (F2) et la production, basée dessus au moins partiellement, d'un signal de déclenchement pour le système de protection d'occupants ;
la première et la deuxième projection transversale (32, 34) des première et deuxième directions de sensibilité (14, 18) étant orientées parallèlement entre elles, et la première et
la deuxième projection principale (22, 24) des première et deuxième directions de sensibilité (14, 18) étant orientées de façon antiparallèle entre elles, et l'analyse étant effectuée de sorte qu'il résulte une compensation des erreurs au moins partielle quand la première ou la deuxième valeur de référence (R1 ou R2) dans la première ou la deuxième voie d'analyse varie.

2. Dispositif selon la revendication 1,
**caractérisé en ce que**
l'analyse est effectuée en fonction de l'orientation de la première et de la deuxième direction de sensibilité par rapport à la direction de mesure principale de sorte que la compensation des erreurs est maximale lors de la variation de la première et de la deuxième valeur de référence (Δ1 et Δ2).

3. Dispositif selon la revendication 1 ou 2,
**caractérisé en ce que**
la première voie d'analyse englobe un premier seuil d'intervention (T1), et **en ce que** la deuxième voie d'analyse englobe un deuxième seuil d'intervention (T2), l'analyse englobant une comparaison d'une première fonction d'analyse du premier signal de mesure traité (F1) et du deuxième signal de mesure traité (F2) avec une deuxième fonction d'analyse du premier seuil d'intervention (T1) et du deuxième seuil d'intervention (T2).

4. Dispositif selon la revendication 3,
**caractérisé en ce que**
la première fonction d'analyse est une différence pondérée ou somme pondérée du premier signal de mesure traité (F1) et du deuxième signal de mesure traité (F2), et **en ce que** la deuxième fonction d'analyse correspondante est une somme pondérée ou différence pondérée du premier seuil d'intervention (T1) et du deuxième seuil d'intervention (T2).

5. Dispositif selon une des revendications précédentes,
**caractérisé en ce que**
la première valeur de référence (R1) et la deuxième valeur de référence (R2) sont une valeur de référence commune à la première et à la deuxième voie d'analyse.

6. Dispositif selon une des revendications précédentes,
**caractérisé en ce que**
l'écart angulaire de la première direction de sensibilité (14) et celui de la deuxième direction de sensibilité (18) par rapport à la direction de mesure principale (20) ainsi que par rapport à la direction transversale sont différents de 0° ou de 90°, en particulier sont supérieurs ou égaux à 10°.

7. Dispositif selon une des revendications précédentes,
**caractérisé en ce que**
l'écart angulaire entre la première direction de sensibilité (14) et la deuxième direction de sensibilité (18) est essentiellement de 90°.

8. Dispositif selon une des revendications précédentes,
**caractérisé en ce que**
l'angle de la première direction de sensibilité (14) par rapport à la direction de mesure principale (20) est essentiellement de 45° ou 135° ou bien de -45° ou -135° ou bien de 225° ou 315° et **en ce que** l'angle de la deuxième direction de sensibilité (18) par rapport à la direction de mesure principale (20) st essentiellement de 135° ou 45° ou bien de -45° ou -315° ou bien de 315° ou 225°.

9. Dispositif selon une des revendications 1 à 8,
**caractérisé en ce que**
la direction de mesure principale (20) est essentiellement la direction vers l'avant (26) du véhicule.

10. Dispositif selon une des revendications 1 à 8,
**caractérisé en ce que**
la direction de mesure principale (20) est essentiellement perpendiculaire à la direction vers l'avant (26) du véhicule.

11. Dispositif selon une des revendications précédentes,
**caractérisé en ce que**
le premier et le deuxième capteur d'accélération (12, 16) et les moyens d'analyse sont disposés dans un appareil central.

12. Dispositif selon une des revendications précédentes,
**caractérisé en ce qu'**il
englobe également au moins un capteur frontal (40) ou au moins un capteur latéral (42) ou un capteur de protection (44).

13. Procédé pour la mesure d'accélérations pour un système de protection d'occupants de véhicule, comprenant les étapes suivantes :
i) détermination d'une direction de mesure principale (20) par rapport à une direction vers l'avant (26) d'un véhicule ;
ii) mise à disposition d'un premier capteur d'accélération (12) avec une première direction de sensibilité (14) qui, dans sa projection sur la direction de mesure principale (20), forme une première projection principale (22) et, dans sa projection sur une direction transversale (30) orientée perpendiculairement à la direction de mesure principale (20), forme une première projection transversale (32) ;
iii) mise à disposition d'un deuxième capteur d'accélération (16) avec une deuxième direction de sensibilité (18) qui, dans sa projection sur la direction de mesure principale (20), forme une deuxième projection principale (24) et, dans sa projection sur la direction transversale (30), forme une deuxième projection transversale (34) ;
la première et la deuxième projection transversale (32, 34) des première et deuxième directions de sensibilité (14, 18) étant orientées parallèlement entre elles, et la première et la deuxième projection principale (22, 24) des première et deuxième directions de sensibilité (14, 18) étant orientées de façon antiparallèle entre elles ;
iv) traitement du premier signal de mesure du premier capteur d'accélération (12) pour la formation d'un premier signal traité (F1) par rapport à une première valeur de référence (R1) dans une première voie d'analyse pour le traitement d'un premier signal du premier capteur d'accélération (12) ;
v) traitement du deuxième signal de mesure du deuxième capteur d'accélération (16) pour la formation d'un deuxième signal traité (F2) par rapport à une deuxième valeur de référence (R2) dans une deuxième voie d'analyse pour le traitement d'un deuxième signal du deuxième capteur d'accélération (16) ;
vi) analyse du premier et du deuxième signal traité (F1 et F2) par rapport au premier et deuxième seuil d'intervention (T1 et T2) correspondant, de sorte qu'il en résulte une compensation des erreurs au moins partielle quand la première et la deuxième valeur de référence (R1 et R2) varient dans la première ou la deuxième voie d'analyse.

14. Procédé selon la revendication 13,
**caractérisé en ce que**
l'analyse est configurée en fonction de l'orientation de la première et de la deuxième direction de sensibilité par rapport à la direction de mesure principale de sorte que la compensation des erreurs est maximale lors de la variation de la première et de la deuxième valeur de référence.

15. Procédé selon la revendication 13 ou 14,
**caractérisé en ce que**
l'analyse dans l'étape vi) englobe :
a) la formation d'une fonction pondérée de somme de seuils ou d'une fonction pondérée de différence de seuils du premier seuil d'intervention (T1) et du deuxième seuil d'intervention (T2) ;
b) la formation d'une fonction pondérée de différence ou d'une fonction pondérée de somme du premier signal de mesure traité (F1) et du deuxième signal de mesure traité (F1);
c) la comparaison de la fonction pondérée de différence ou de la fonction pondérée de somme en provenance de l'étape b) avec la fonction pondérée de somme de seuils ou la fonction pondérée de différence de seuils en provenance de l'étape a) ; le signal de déclenchement étant en outre placé dans l'état de déclenchement quand la fonction pondérée de différence ou la fonction pondérée de somme en provenance de l'étape b) dépasse la fonction pondérée de somme de seuils ou la fonction pondérée de différence de seuils en provenance de l'étape a).

16. Procédé selon une des revendications 13 à 15,
**caractérisé en ce que**
dans l'étape b), la fonction pondérée de différence ou la fonction pondérée de somme du premier signal de mesure traité (F1) et du deuxième signal de mesure traité (F2) présente la forme
a1*F1 - a2*F2 ou a1*F1 + a2*F2,
et a1 et a2 sont des facteurs de normalisation avec 0 < a1, a2 < 1 et, dans l'étape a), la fonction pondérée de somme de seuils ou la fonction pondérée de différence de seuils du premier seuil d'intervention (T1) et du deuxième seuil d'intervention (T2) présente la forme
b1*T1 - b2*T2 ou b1*T1 + b2*T2,
et b1 et b2 sont des facteurs de normalisation avec 0 < b1, b2 < 1.

17. Procédé selon la revendication 16,
**caractérisé en ce que**
a1 ≈ cos α1 et a2 ≈ cos α2
α1 étant l'angle entre la direction de mesure principale (20) et la première direction de sensibilité (14), et α2 étant l'angle entre la direction de mesure principale (20) et la deuxième direction de sensibilité (18).

18. Procédé selon une des revendications 13 à 17,
**caractérisé en ce que**
la première valeur de référence (R1) et la deuxième valeur de référence (R2) sont une valeur de référence commune à la première et à la deuxième voie d'analyse.

19. Procédé selon une des revendications 13 à 18,
**caractérisé en ce que**
dans les étapes iv) et v), le traitement du premier ou du signal de mesure du premier ou du capteur d'accélération (12 et 16) englobe au moins une intégration du signal de mesure.
